# EUROPÄISCHE PATENTSCHRIFT

(11) **EP 1 336 369 B1**
(45) Veröffentlichungstag und Bekanntmachung des Hinweises auf die Patenterteilung: **10.05.2006**
(21) Anmeldenummer: 03001139.9
(22) Anmeldetag: 21.01.2003
(51) Int. Cl.: A47L 15/42, G01F 23/292

(54) **Programmgesteuerte Geschirrspülmaschine mit einer Überlaufsicherung**
Programme operated dishwasher with overflow safety means
Lave-vaisselle contrôlé par programme avec système antidébordement

(30) Priorität: 15.02.2002 DE 10206277
(43) Veröffentlichungstag der Anmeldung: 20.08.2003
(73) Patentinhaber: Miele & Cie. KG, 33332 Gütersloh (DE)
(72) Erfinder: Tiekötter, Stefan, 33699 Bielefeld (DE); Wegener, Dirk, 33649 Bielefeld (DE); Wolf, Cornelius, 33739 Bielefeld (DE)

(56) Entgegenhaltungen:
- DE-A- 19 945 925
- FR-A- 2 492 974

## Beschreibung

Die Erfindung betrifft eine programmgesteuerte Geschirrspülmaschine mit einem über ein Zulaufventil befüllbaren Spülbehälter, der über eine Umwälzpumpe für die Spülflüssigkeit mit einem Sprüharm-Zuflussrohr in Verbindung steht, sowie mit einem optischen mit Lichtsender und Lichtempfänger versehenen Flüssigkeitssensor in Art eines transparenten, prismatischen Reflexionskörpers als Überlauf-Sicherheitseinrichtung für den Spülbehälter.

Für Geschirrspülmaschinen ist eine solche Sicherheitseinrichtung als Schutz vor einem Überfüllen des Spülbehälters aus dem DE 82 18 877 U1 bekannt geworden. Die bekannte Einrichtung zur Überwachung des Füll-Sicherheitsniveaus im Spülbehälter ist dadurch realisiert, dass in einem mit dem Spülbehälter flüssigkeitsleitend in Verbindung stehenden Zuflussbehälter ein lichtleitender Stab in Form eines transparenten, prismatischen Reflexionskörpers ragt, der an seinem oberen Ende eine einer Lichtquelle zugewandte Lichteinfallfläche und an seinem unteren Endabschnitt eine lichtreflektierende Fläche aufweist. Die reflektierende Fläche verläuft annähernd unter 45°. Steigt die Spülflüssigkeit in dem Behälter so weit an, dass der Stab in die Flüssigkeit eintaucht, so wird der Strahlengang der Lichtquelle geändert und eine diese Änderung registrierende Lichtschranke schaltet das Zulaufventil für die Spülflüssigkeit ab. Die bekannte Überlaufeinrichtung ist zusätzlich zum Spülbehälter vorzusehen, was mit einem erheblichen baulichen Aufwand verbunden ist. Da ferner bei dem Zusatzbehälter nicht verhindert werden kann, dass sich im Laufe der Zeit eine Trübung der Reflexionsflächen der Reflexionslichtschranke einstellt, welche durch den sich im Behälter ansammelnden Schmutz aus der umlaufenden Spülflüssigkeit resultiert, sind Schaltfehler der zugeordneten Sensor-Elektronik nicht auszuschließen. Somit ist die Sicherheit des Systems nicht gewährleistet. Auch bei einem in der DE 199 45 925 A1 offenbarten Refexions-Lichtleiter kann dieses Problem auftreten. Der letztgenannte Technikstand ist ebenfalls bauaufwendig, weil dort das optische System nur mit einem zusätzlichen dem prismatischen Reflexionskörper zuzuordnenden Tauchstab im Behälter funktioniert. Auch hier soll die Erfindung Abhilfe schaffen.

Erfindungsgemäß werden die aufgezeigten Probleme bei einer Geschirrspülmaschine nach dem Oberbegriff mit den Merkmalen des Kennzeichens des Patentanspruchs 1 gelöst. Vorteilhafte Ausgestaltungen und Weiterbildungen der Erfindung ergeben sich aus den nachfolgenden Unteransprüchen.

Durch die vorteilhafte Anordnung des prismatischen Reflexionskörpers zur Sicherheitsniveauüberwachung im aufsteigenden Sprüharm-Zuflussrohr kann ohne baulichen Mehraufwand eines Zusatzbehälters die Überlaufsicherung einfach realisiert werden. Hierbei können im Gerät ohnehin vorhandene Einrichtungen mitverwendet werden, wodurch auch die Herstellkosten der Sicherheitseinrichtung gering sind. Eine Verschmutzung der Überlaufsicherung bzw. der Reflexionsflächen des transparenten Prisma ist nicht zu erwarten, weil das Sprüharm-Zuflussrohr mit dem Sensor im Spülbetrieb der Geschirrspülmaschine ständig durchflutet wird.

Ein Ausführungsbeispiel der Erfindung ist in den Zeichnungen rein schematisch dargestellt und wird nachfolgend näher beschrieben. Es zeigt
- Figur 1: eine Geschirrspülmaschine in vereinfachter Darstellung mit ihren betriebswichtigen Baueinheiten, wie Sprüherme, Spülbehälter usw.,
- Figur 2: ein Sprüharm-Zuflussrohr der Geschirrspülmaschine im Längsschnitt mit einem optischen Flüssigkeitssensor als Überlaufsicherung für den Spülbehälter,
- Figur 3: das Zuflussrohr mit dem Flüssigkeitssensor in der Draufsicht,
- Figur 4: das Sprüharm-Zuflussrohr mit dem optischen Flüssigkeitssensor in einer von Fig. 2 abweichenden Anordnung.

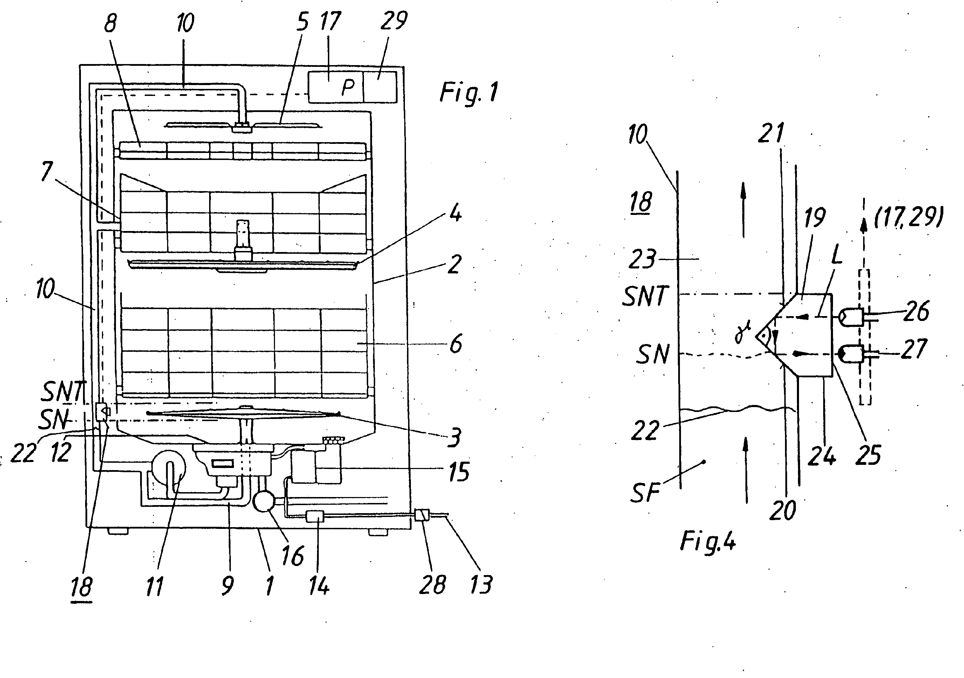

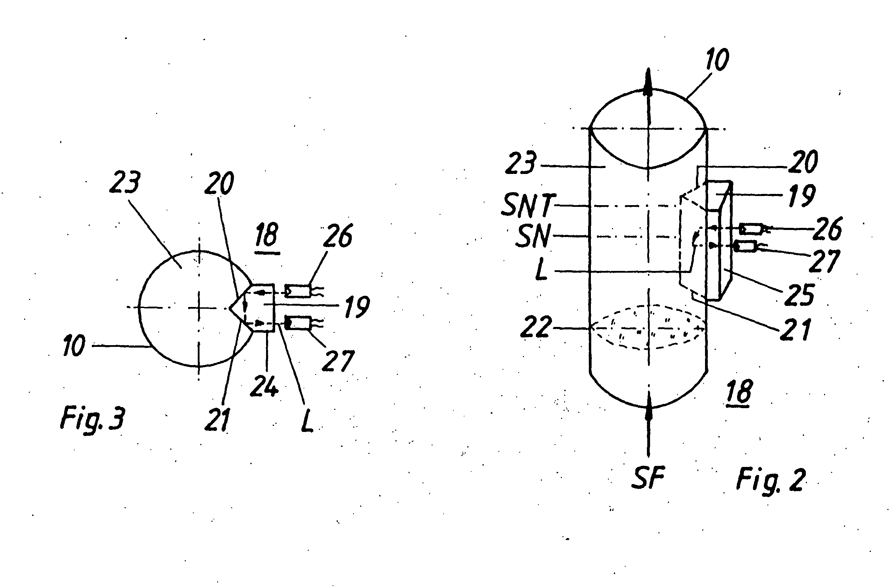

Eine in Fig. 1 vereinfacht dargestellte programmgesteuerte Geschirrspülmaschine (1) weist einen Spülbehälter (2) und mehrere Sprüharme (3 bis 5) auf, die über, unter und zwischen Geschirrkörben (6, 7) und einer separaten Besteckschublade (8) in unterschiedlichen Spülebenen im Spülbehälter (2) angeordnet sind. Die Sprüharme (3 bis 5) werden über zugeordnete Sprüharm-Leitungswege oder Zuflussrohre (9, 10) von der umlaufenden Spülflüssigkeit (SF), siehe auch Fig. 2 und 4, einer vorgeschalteten Umwälzpumpe (11) gespeist, wobei die Spülflüssigkeit (SF) im Spülbetrieb ständig über eine Filtersiebkombination (12) geführt wird, die aus einem im Spülbehälterboden angeordneten Feinsieb sowie aus einem Grobsieb und einem Feinstsieb (nicht dargestellt) besteht. Dort werden Speisereste aus der Spülflüssigkeit (SF) herausgefiltert. Das zum mittleren oder oberen Sprüharm (4 bzw. 5) geführte Sprüharm-Zuflussrohr (10) ist dabei aufsteigend im Gerätegehäuse entlang dem Spülbehälter (2) verlegt. Über den Wasserweg der vorgeschalteten Umwälzpumpe (11) ist das Zuflussrohr (10) mit dem Spülbehälter (2) verbunden und verkörpert eine kommunizierende Röhre, welche während des Wassereinlaufs bei ausgeschalteter Umwälzpumpe (11) den Füllstand des Spülbehälters (2) annimmt.

Mit (13) ist ein Frischwasseranschluss bezeichnet, über welchen das Frischwasser zur Geschirrreinigung als Spülflüssigkeit (SF) in den wasserführenden Programmabschnitten Vorspülen, Reinigen, Zwischenspülen und Klarspülen in den Spülbehälter (2) gelangt und dabei den Weg über einen Durchflussmengenmesser (14) sowie eine geräteeigene Enthärtungseinrichtung (15) nimmt. Dabei werden Wasserwege über Magnetventile freigeschaltet oder gesperrt.

Mit (28) ist dabei das Magnetventil im Frischwasseranschluss (13) bezeichnet. Magnetventile steuern auch den Wasserweg der Enthärtungseinrichtung (15). Das enthärtete Spülwasser wird insbesondere im Klarspülgang verwendet, in welchem auch ein Klarspülmittel zudosiert wird.

Die frontseitig zu beladende Geschirrspülmaschine (1) wird durch manuell oder automatisch anwählbare Spülprogramme gesteuert, die jeweils die schon genannten Programmabschnitte, wie Vorspülen, Reinigen, Zwischenspülen und Klarspülen beinhalten, wobei je nach festgestelltem Verschmutzungsgrad des geladenen Geschirrs bzw. der umgewälzten Spülflüssigkeit (SF) die Vorspül- und/oder Zwischenspülgänge aus- oder zusätzlich eingeschaltet werden können. Nach dem letzten wasserführenden Programmabschnitt Klarspülen schließt sich im Spülprozess wie bekannt ein separater Programmabschnitt Trocknen an, in welchem das gereinigte Geschirr durch ein nicht gezeigtes Trocknungsgebläse unterstützt getrocknet wird. Jeweils am Ende eines wasserführenden Programmabschnitts wird die benutzte Spülflüssigkeit (SF) mittels der geräteeigenen Laugenpumpe (16) aus dem Spülbehälter (2) entfernt.

Auf die konkrete Darstellung der nur schematisch gezeigten Programmsteuerung (17) der Geschirrspülmaschine (1) ist der besseren Übersicht halber verzichtet worden. Diese umfasst zumindest einen Mikroprozessor sowie an sich bekannte flüchtige und nicht flüchtige Programm-und Datenspeicher, in denen die auswählbaren Spülprogramme und die den Spülverlauf bestimmenden Prozessvariablen hinterlegt sind. Eine so konzipierte moderne Geschirrspülmaschine (1) ist zur Optimierung des Spülprogrammlaufes sowie für einen wasser- und energiesparenden Betrieb in aller Regel mit einer in den Programmlauf eingreifenden Sensorik ausgestattet, welche beispielsweise einen Trübungssensor verwendet, der Spülwassertrübungen in den wasserführenden Programmschritten sensiert und ggf. zusätzliche Wasserwechsel veranlasst. Weiterhin besitzt eine solche Geschirrspülmaschine (1) zumindest eine Sicherungseinrichtung (18), siehe auch Fig. 2 und 4, die ein Überfüllen des Spülbehälters (2) oberhalb eines Spülbehälter-Sicherheitsniveaus (SN) verhindert. Dieses Niveau liegt unterhalb eines höchsten Flüssigkeitsniveaus (SNT), welches durch die nicht gezeigte Türschürzendichtung der schwenkbaren Gerätetür bestimmt ist.

Nach der Erfindung umfasst die Überlauf-Sicherheitseinrichtung (18) für den Spülbehälter (2) einen optischen mit Lichtsender (26) und Lichtempfänger (27) versehenen Flüssigkeitssensor, der in Art eines transparenten, prismatischen Reflexionskörpers (19) ausgebildet und erfindungsgemäß mit seinen Reflexionsflächen (20, 21) im aufsteigenden Sprüharm-Zuflussrohr (10) in Höhe des Spülbehälter-Sicherheitsniveaus (SN) angeordnet ist. Das aufsteigende Zuflussrohr (10) mit dem Reflexionskörper (19) ist als kommunizierende Röhre zum Spülbehälter (2) in der Geschirrspülmaschine (1) verlegt. Dementsprechend entspricht der Normal-Spülflüssigkeitsstand (22) im Spülbehälter (2), sh. Fig. 1, 2 und 4, dem Stand der Spülflüssigkeit (SF) bei abgeschalteter Umwälzpumpe (11). Bei dem oberen Niveau (SNT) muss der Sensor reagiert haben.

Der prismatische Reflexionskörper (19) ragt nach Fig. 2 und 3 in das Rohrinnere (23) des Zuflussrohres (10) hinein, wobei die Reflexionsflächen (20, 21) des Körpers nach Fig. 2 vorzugsweise längs der Strömungsrichtung (S) der transportierten Spülflüssigkeit (SF) und gemäß Fig. 4 quer dazu ausgerichtet sind, sh. Pfeil, Fig. 2 bzw. Fig. 4. Die in das Zuflussrohr (10) eintauchenden Reflexionsflächen (20, 21) des prismatischen Reflexionskörpers (19) sind dreieck-oder dachförmig gestaltet, wobei ein aus dem Zuflussrohr (10) herausgeführtes Teil (24) des Reflexionskörper (19) stabförmig, vorzugsweise quadorförmig ausgebildet ist. Vor der Stirnfläche (25) des stabförmigen Teils (24) des Reflexionskörpers (19) sind der zugeordnete Lichtsender (Leuchtdiode 26) und räumlich darunter der Lichtempfänger (Fototransistor 27) installiert. Die dreieck- oder dachförmigen Reflexionsflächen (20, 21) im Rohrinneren (23) des Zuflussrohres (10) schließen einen Winkel (γ) von vorzugsweise 90° ein.

Die nach Fig. 2 und 3 in Strömungsrichtung der Spülflüssigkeit (SF) verlaufenden Reflexionsflächen (20, 21) des prismatischen Reflexionskörpers (19) bieten den Vorteil, dass Spülflüssigkeit nach dem Abschalten der Umwälzpumpe (11) seitlich an den Reflexionsflächen (20, 21) ablaufen kann. An den sich ebenfalls überwiegend in Längsrichtung erstreckenden Kanten des Prismas können sich daher auch keine Schmutzpartikelreste absetzen, welche die Messung negativ beeinflussen. Gemäß Fig. 2 sind Lichtsender (26) und Lichtempfänger (27) nahezu mittig in Höhe des Spülbehälter-Sicherheitsniveaus (SN) vor der Stirnfläche (25) des stabförmigen Teils (24) des Reflexionskörpers (19) angeordnet. Dies hat den Vorteil, dass sich am Reflexionskörper (19) ggf. absetzende Tropfen ebenfalls die Niveausensierung nicht stören können. Verbliebene Tropfen am Prisma werden sich mit hoher Wahrscheinlichkeit bei dieser Anordnung des Prismas hauptsächlich am unteren Ende des Reflexionskörper (19) absetzen.

Der Normal-Spülflüssigkeitsstand (22) im Spülbehälter (2) entspricht dem Stand der Spülflüssigkeit (SF) bei abgeschalteter Umwälzpumpe (11) und liegt tiefer als Lichtsender und -empfänger. Das obere Niveau (SNT), bei dem der Sensor reagiert haben muss, liegt oberhalb des Lichtsenders (26), beispielsweise am oberen Rand des prismatischen Reflexionskörpers (19) des optischen Sensors.

Bei der Anordnung gemäß Fig. 4, bei welcher die Reflexionsflächen (20, 21) des Prismas quer zur Strömungsrichtung (S) der transportierten Spülflüssigkeit (SF) ausgerichtet sind, weist die im Zuflussrohr (10) in Strömungsrichtung der Spülflüssigkeit (SF) liegende untere Reflexionsfläche (20) des prismatischen Reflexionskörpers (19) bezogen auf die Rohrachse oder Flussrichtung der Spülflüssigkeit (SF) einen Anstellwinkel von 45° auf. Die obere Reflexionsfläche (21) kennzeichnet das Niveau (SNT), bei dem der Sensor reagiert haben muss. Diese Anordnung des Sensors ist durch die tieferliegende untere Reflexionsfläche 20 (Sicherheitsniveau SN) insofern vorteilhaft, da schon bei Wasserberührung frühzeitig das Überfüllen signalisiert wird. Die Schrägstellung der unteren Reflexionsfläche (20) gemäß Fig. 4 als fehlerauslösende Grenzfläche bietet ausreichend Zeit, das Magnetventil (28) zum Schließen der Frischwasserzufuhr anzusteuern.

Der Lichtstrahl (L) des Lichtsenders (26) durchdringt den Reflexionskörper (19) im Stabinnern und wird an den beiden im Strömungsweg der Spülflüssigkeit (SF) angeordneten dachförmigen Reflexionsflächen (20, 21) total reflektiert und parallel zum Lichtempfänger (27) zurückgeleitet, wenn die Reflexionsflächen (20, 21) nicht mit Spülflüssigkeit (SF) beaufschlagt sind. Bei benetzten Reflexionsflächen (20, 21) erfährt der Lichtstrahl (L) keine Reflexion und wird in die Spülflüssigkeit (SF) abgelenkt. Der Lichtempfänger (27) erhält entsprechend kein Signal und löst die Schaltmaßnahme zur Vermeidung eines Überlaufs des Spülbehälters (2) aus. Hierfür ist dem optischen Flüssigkeitssensor eine dessen Signale erkennende Schalteinrichtung (29) nachgeschaltet, welche direkt oder über die Programmsteuerung (17) des Gerätes beim Erreichen und/oder Überschreiten des Spülbehälter-Sicherheitsniveaus (SN) die Schaltmaßnahme bewirkt. Diese Maßnahme veranlasst das Abschalten des Zulaufventils (28), ggf. auch des Gerätes. Zweckmäßig wird auch eine Fehlermeldung veranlasst.

Der Reflexionskörper (19) ist mit dem Zuflussrohr (10) adaptierbar ausgebildet. Im einfachsten Fall ist das Zuflussrohr (10) hierfür mit einer Bohrung zu versehen, in welche der prismatische Reflexionskörper (19) flüssigkeitsdicht eingesteckt wird. Es besteht jedoch auch die Möglichkeit, einen Rohrabschnitt des Zuflussrohres (10) in Sicherheitsniveauhöhe einteilig mit dem Reflexionskörper (19) aus transparentem Kunststoff auszubilden.

Durch die vorteilhafte Anordnung des prismatischen Reflexionskörpers (19) im aufsteigenden Sprüharm-Zuflussrohr (10) ist die Überlaufsicherung einfach zu realisieren. Das Sprüharm-Zuflussrohr (10) mit dem Sensor wird im Spülbetrieb der Geschirrspülmaschine (1) ständig durchspült, so dass der Sensor nicht eintrübt und als Reflexionslichtschranke optimal funktionieren kann. Befindet sich im Messzeitraum Luft im Bereich des Spülbehälter-Sicherheitsniveaus (SN) im Zulaufrohr, so liegen die Reflexionsflächen (20, 21) frei und der Lichtstrahl (L) der Lichtquelle wird zweimal total reflektiert und gelangt nahezu ohne Verluste zum Lichtempfänger (27). Dieser Zustand stellt sich bei ordnungsgemäßem Frischwasserzulauf ein, wenn alle im Frischwasserkreislauf angeordneten Magnetventile (28), Durchflussmengenmesser (14) und dergl. störungsfrei arbeiten und der Spülwasserzulauf beim Erreichen des voreingestellten Normal-Flüssigkeitsstandes (22) im Spülbehälter (2) programmgemäß abgeschaltet wird.

Im Fehlerfall, wenn die Sicherheitseinrichtung (18) bzw. der prismatische Reflexionskörper (19) mit Spülflüssigkeit (SF) beaufschlagt wird, liegen andere Brechungsverhältnisse vor. Der Lichtstrahl (L) wird dann nicht mehr total reflektiert, sondern an der einfallenden Grenzfläche der unteren Reflexionsfläche (20) gebrochen und damit in die Spülflüssigkeit (SF) abgelenkt. Der Lichtempfänger (27) erhält dann kein reflektiertes Licht. Die beiden Zustände werden wie vorerwähnt elektronisch ausgewertet, wobei der Fehlerfall die Schaltmaßnahme zur Vermeidung eines Überlaufs des Spülbehälters (2) auslöst.

## Patentansprüche

1. Programmgesteuerte Geschirrspülmaschine mit einem über ein Zulaufventil befüllbaren Spülbehälter, der über eine Umwälzpumpe für die Spülflüssigkeit mit einem Sprüharm-Zuflussrohr in Verbindung steht, sowie mit einem optischen mit Lichtsender und Lichtempfänger versehenen Flüssigkeitssensor in Art eines transparenten, prismatischen Reflexionskörpers als Überlauf-Sicherheitseinrichtung für den Spülbehälter,
**dadurch gekennzeichnet,**
**dass** der prismatische Reflexionskörper (19) mit seinen Reflexionsflächen (20, 21) im aufsteigenden Sprüharm-Zuflussrohr (10) in Höhe des Spülbehälter-Sicherheitsniveaus (SN) angeordnet ist.

2. Geschirrspülmaschine nach Anspruch 1,
**dadurch gekennzeichnet,**
**dass** der prismatische Reflexionskörper (19) in das Rohrinnere (23) des Zuflussrohres (10) hineinragt, wobei die Reflexionsflächen (20, 21) des Körpers in Strömungslängsrichtung der transportierten Spülflüssigkeit (SF) ausgerichtet sind.

3. Geschirrspülmaschine nach Anspruch 1,
**dadurch gekennzeichnet,**
**dass** die Reflexionsflächen (20, 21) des Reflexionskörper (19) quer zur Strömungsrichtung der transportierten Spülflüssigkeit (SF) ausgerichtet sind.

4. Geschirrspülmaschine nach einem oder mehreren der Ansprüche 1 bis 3,
**dadurch gekennzeichnet,**
**dass** die in das Zuflußrohr eintauchenden Reflexionsflächen (20, 21) des prismatischen Reflexionskörpers (19) dreieck- oder dachförmig und ein aus dem Zuflussrohr (10) herausgeführtes Teil (24) des Reflexionskörpers (19) stabförmig, vorzugsweise quaderförmig ausgebildet ist, wobei dieser Teil (24) des Reflexionskörpers (19) vor dem zugeordneten Lichtsender (26) und Lichtempfänger (27) endet.

5. Geschirrspülmaschine nach einem oder mehreren der Ansprüche 1 bis 4,
**dadurch gekennzeichnet,**
**dass** die dreieck- oder dachförmigen Reflexionsflächen (20, 21) im Rohrinneren (23) des Zuflussrohres (10) einen Winkel (γ) von vorzugsweise 90° einschließen.

6. Geschirrspülmaschine nach einem oder mehreren der Ansprüche 1 bis 5,
**dadurch gekennzeichnet,**
**dass** Lichtsender (26) und Lichtempfänger (27) vor der Stirnfläche (25) des stabförmigen Teils (24) des Reflexionskörpers (19) als Reflexionslichtschranke so angeordnet sind, dass der Lichtstrahl (L) des Lichtsenders (26) den Reflexionskörper (19) im Innern durchdringt und an den beiden im Strömungsweg der Spülflüssigkeit (SF) angeordneten dachförmigen Reflexionsflächen, (20, 21) wenn diese nicht mit Spülflüssigkeit (SF) beaufschlagt sind, total reflektiert und parallel zum Lichtempfänger (27) zurück geleitet wird, und dass der Lichtstrahl (L) bei benetzten Reflexionsflächen (20, 21) in die Spülflüssigkeit (SF) abgelenkt wird und eine Schaltmaßnahme zur Vermeidung eines Überlaufs des Spülbehälters (2) auslöst.

7. Geschirrspülmaschine nach einem oder mehreren der Ansprüche 1 bis 6,
**dadurch gekennzeichnet,**
**dass** die Sicherheitseinrichtung (18) mit dem Zuflussrohr (10) adaptierbar ausgebildet ist.

8. Geschirrspülmaschine nach einem oder mehreren der Ansprüche 1 bis 7,
**dadurch gekennzeichnet,**
**dass** das Zuflussrohr (10) in Sicherheitsniveauhöhe (SN) einteilig mit dem Reflexionskörper (19) ausgebildet ist.

9. Geschirrspülmaschine nach einem oder mehreren der Ansprüche 1 bis 8,
**dadurch gekennzeichnet,**
**dass** das aufsteigende Zuflussrohr (10) mit dem Reflexionskörper (19) als kommunizierende Röhre zum Spülbehälter (2) in der Geschirrspülmaschine (1) verlegt ist, und dass der ventilgesteuerte Spülwasserzulauf zum Spülbehälter (2) bei ausgeschalteter Umwälzpumpe (11) im Zuflussrohr (10) überwacht wird.

10. Geschirrspülmaschine nach einem oder mehreren der Ansprüche 1 bis 9,
**dadurch gekennzeichnet,**
**dass** der Sicherheitseinrichtung (18) eine deren Signale erkennende Schalteinrichtung (29) nachgeschaltet ist, welche direkt oder über die Programmsteuerung (17) des Gerätes beim Erreichen und/oder Überschreiten des Spülbehälter-Sicherheitsniveaus (SN) eine Schaltmaßnahme, wie beispielsweise das Abschalten des Zulaufventils (28) einleitet sowie vorzugsweise eine Fehlermeldung anzeigt.

## Claims

1. Program-controlled dishwashing machine, having a washing chamber which is fillable via an inlet valve and is in communication with a spraying arm supply pipe via a circulating pump for the washing liquid, as well as an optical liquid sensor, provided with a light transmitter and a light receiver, in the form of a transparent, prismatic reflecting body serving as an overflow safety device for the washing chamber, **characterised in that** the prismatic reflecting body (19) is disposed with its reflecting faces (20, 21) in the ascending spraying arm supply pipe (10) at the height of the washing chamber safety level (SN).

2. Dishwashing machine according to claim 1, **characterised in that** the prismatic reflecting body (19) protrudes into the pipe interior (23) of the supply pipe (10), the reflecting faces (20, 21) of the body being orientated in the longitudinal direction of flow of the transported washing liquid (SF).

3. Dishwashing machine according to claim 1, **characterised in that** the reflecting faces (20, 21) of the reflecting body (19) are orientated transversely relative to the direction of flow of the transported washing liquid (SF).

4. Dishwashing machine according to one or more of claims 1 to 3, **characterised in that** the reflecting faces (20, 21) of the prismatic reflecting body (19), which extend into the supply pipe, are triangular or roof-shaped, and one portion (24) of the reflecting body (19), extending from the supply pipe (10), has a rod-shaped configuration, preferably a parallelepiped configuration, this portion (24) of the reflecting body (19) terminating before the associated light transmitter (26) and light receiver (27).

5. Dishwashing machine according to one or more of claims 1 to 4, **characterised in that** the triangular or roof-shaped reflecting faces (20, 21) in the pipe interior (23) of the supply pipe (10) form an angle (γ) of preferably 90°.

6. Dishwashing machine according to one or more of claims 1 to 5, **characterised in that** the light transmitter (26) and the light receiver (27) are disposed before the end face (25) of the rod-shaped portion (24) of the reflecting body (19), serving as a reflecting light barrier, in such a manner that the light beam (L) of the light transmitter (26) penetrates the interior of the reflecting body (19) and is totally reflected on the two roof-shaped reflecting faces (20, 21), disposed in the flow path of the washing liquid (SF), when said reflecting faces are not impinged with washing liquid (SF), and said light beam is conducted back parallel to the light receiver (27), and **in that**, when the reflecting faces (20, 21) are wet, the light beam (L) is deflected into the washing liquid (SF) and activates a switching measure to prevent an overflow of the washing chamber (2).

7. Dishwashing machine according to one or more of claims 1 to 6, **characterised in that** the safety device (18) is configured so as to be adaptable to the supply pipe (10).

8. Dishwashing machine according to one or more of claims 1 to 7, **characterised in that** the supply pipe (10) is configured to be integral with the reflecting body (19) at the height of the safety level (SN).

9. Dishwashing machine according to one or more of claims 1 to 8, **characterised in that** the ascending supply pipe (10) is displaced with the reflecting body (19) as the tube communicating with the washing chamber (2) in the dishwashing machine (1), and **in that** the valve-controlled supply of washing water to the washing chamber (2) is monitored when the circulating pump (11) in the supply pipe (10) is switched-off.

10. Dishwashing machine according to one or more of claims 1 to 9, **characterised in that** the safety device (18) has a switching device (29) connected to its output end, which switching device recognises the signals of said safety device, and introduces a switching measure, such as for example the switching-off of the inlet valve (28), and also preferably displays an error message, directly or via the program control (17) of the appliance when the washing chamber safety level (SN) is reached and/or exceeded.

## Revendications

1. Lave-vaisselle commandé par programme avec une cuve de lavage pouvant être remplie ou remplissable par une vanne d'arrivée qui est en communication par l'intermédiaire d'une pompe de circulation pour le liquide de lavage avec un tuyau d'alimentation de bras d'aspersion, ainsi qu'avec un capteur de liquide optique muni d'un émetteur de lumière et d'un récepteur de lumière à la manière d'un corps de réflexion prismatique transparent servant de dispositif de sécurité anti-débordement pour la cuve de lavage,
**caractérisé par le fait**
**que** le corps de réflexion prismatique (19) avec ses surfaces de réflexion (20, 21) est disposé dans le tuyau d'alimentation de bras d'aspersion (10) ascendant à hauteur du niveau de sécurité (SN) de la cuve de lavage.

2. Lave-vaisselle selon la revendication 1,
**caractérisé par le fait**
**que** le corps de réflexion prismatique (19) dépasse dans l'intérieur (23) du tuyau d'alimentation (10), les surfaces de réflexion (20, 21) du corps étant dirigées dans la direction longitudinale d'écoulement du liquide de lavage (SF) transporté.

3. Lave-vaisselle selon la revendication 1,
**caractérisé par le fait**
**que** les surfaces de réflexion (20, 21) du corps de réflexion (19) sont dirigées transversalement à la direction d'écoulement du liquide de lavage (SF) transporté.

4. Lave-vaisselle selon l'une ou plusieurs des revendications 1 à 3,
**caractérisé par le fait**
**que** les surfaces de réflexion (20, 21) du corps de réflexion prismatique (19) plongeant dans le tuyau d'alimentation sont triangulaires ou en forme de toit et qu'une partie (24) du corps de réflexion (19) menée hors du tuyau d'alimentation (10) est en forme de barre, de préférence parallélépipédique, cette partie (24) du corps de réflexion (19) se terminant avant l'émetteur de lumière (26) et le récepteur de lumière (27) associé.

5. Lave-vaisselle selon l'une ou plusieurs des revendications 1 à 4,
**caractérisé par le fait**
**que** les surfaces de réflexion (20, 21) triangulaires ou en forme de toit incluent dans l'intérieur (23) du tuyau d'alimentation (10) un angle (γ) de préférence égal à 90°.

6. Lave-vaisselle selon l'une ou plusieurs des revendications 1 à 5,
**caractérisé par le fait**
**que** l'émetteur de lumière (26) et le récepteur de lumière (27) sont disposés avant la surface frontale (25) de la partie (24) en forme de barre du corps de réflexion (19) en tant que barrière photoélectrique à réflexion de telle manière que le rayon lumineux (L) de l'émetteur de lumière (26) traverse l'intérieur du corps de réflexion (19) et soit totalement réfléchi sur les deux surfaces de réflexion (20, 21) en forme de toit disposées dans le chemin d'écoulement du liquide de lavage (SF) et redirigé parallèlement vers le récepteur de lumière (27) lorsque celles-ci ne sont pas soumises au liquide de lavage (SF), et que, lorsque les surfaces de réflexion (20, 21) sont mouillées, le rayon lumineux (L) soit dévié et déclenche une action de commutation pour éviter un débordement de la cuve de lavage (2).

7. Lave-vaisselle selon l'une ou plusieurs des revendications 1 à 6,
**caractérisé par le fait**
**que** le dispositif de sécurité (18) est conçu de manière à être adaptable au tuyau d'alimentation (10).

8. Lave-vaisselle selon l'une ou plusieurs des revendications 1 à 7,
**caractérisé par le fait**
**que** le tuyau d'alimentation (10) forme une seule pièce avec le corps de réflexion (19) à hauteur du niveau de sécurité (SN).

9. Lave-vaisselle selon l'une ou plusieurs des revendications 1 à 8,
**caractérisé par le fait**
**que** le tuyau d'alimentation (10) ascendant muni du corps de réflexion (19) est posé en tant que tube communicant avec la cuve de lavage (2) dans le lave-vaisselle (1) et que l'arrivée d'eau de lavage commandée par vanne dans la cuve de lavage (2) est surveillée dans le tuyau d'alimentation (10) lorsque la pompe de circulation (11) est arrêtée.

10. Lave-vaisselle selon l'une ou plusieurs des revendications 1 à 9,
**caractérisé par le fait**
**que** le dispositif de sécurité (18) est suivi d'un dispositif de commutation (29) qui reconnaît ses signaux et déclenche, directement ou par l'intermédiaire du programmateur (17) de l'appareil, une action de commutation, par exemple la coupure de la vanne d'arrivée (28), en cas d'atteinte ou de dépassement du niveau de sécurité (SN) de la cuve de lavage, et affiche de préférence un message d'erreur.
